# EUROPÄISCHE PATENTSCHRIFT

(11) **EP 0 866 436 B1**
(45) Veröffentlichungstag und Bekanntmachung des Hinweises auf die Patenterteilung: **15.01.2003**
(21) Anmeldenummer: 98104951.3
(22) Anmeldetag: 18.03.1998
(51) Int. Cl.: G09F 11/00

(54) **Bild-Positioniervorrichtung und Verfahren zu deren Herstellung**
Positioning device for images and manufacturing method
Dispositif pour positionner des images et procédé de fabrication

(30) Priorität: 19.03.1997 DE 19711493
(43) Veröffentlichungstag der Anmeldung: 23.09.1998
(73) Patentinhaber: Hinsberg, Gregor, 50735 Köln (DE)
(72) Erfinder: Hinsberg, Gregor, 50735 Köln (DE)
(74) Vertreter: Turi, Michael, Dipl.-Phys.

(56) Entgegenhaltungen:
- DE-C- 921 734
- FR-A- 2 618 385
- US-A- 4 283 871

## Beschreibung

Die Erfindung betrifft eine Bild-Positioniervorrichtung und ein Verfahren zu dessen Herstellung.

Mit einer Bild-Positioniervorrichtung kann die räumliche Lage von Bildern geändert werden. Unter einem Bild wird im folgenden eine flache Darstellung, entweder durchsichtig oder undurchsichtig z.B. durch Photographie oder Druck hergestellt, verstanden.

Eine Bild-Positioniervorrichtung kann z.B. zum Umblättern von Büchern, Photoalben etc., insbesondere aber für eine Bewegtbild-Animation verwendet werden. Bei einer Bewegtbild-Animation soll bei einem Betrachter der Eindruck eines sich kontinuierlich verändernden Bildes (sog. Bewegtbild) hervorgerufen werden. Hierzu wird eine Vielzahl sich jeweils zeitlich nicht verändernder Bilder (sog. Festbilder) verwendet. Diese werden dem Betrachter nacheinander in schneller Folge gezeigt. Aufeinanderfolgende Festbilder unterscheiden sich jeweils nur infinitesimal voneinander; beim Betrachter entsteht der Eindruck einer flüssigen Bewegung.

Mit einer Bild-Positioniervorrichtung, die für eine Bewegtbild-Animation geeignet ist, beschäftigt sich die DE-C-921 734. Zur Erzeugung bewegter Bilder verwendet sie einen im Auflicht beleuchteten bandförmigen Bildträger, wobei der Bildträger in seiner Bereitschaftslage zur Wiedergabe fortlaufend gleichmäßig zickzackartig eng gefaltet wird und von dem durch die Faltung gebildeten Flächen auf der Bildseite des Bandes jede zweite Fläche mit aufeinanderfolgenden Bewegungsbildern bedruckt ist. Eine Bewegtbild-Animation wird dann durch ein schnelles Entfalten des gefalteten Bildträgers erzeugt. Die einzelnen Abschnitte des bekannten Bildträgers sind jeweils an ihren Endkanten miteinander verbunden. Dies führt zu einem Bewegungsablauf zur Erzeugung der Animation, derart, daß sie von einem gefalteten in einen ungefalteten Zustand übergeht, was keine Umkehr der Bewegbild-Animation mehr ermöglicht. Des weiteren ist eine sehr aufwendige Vorrichtung zur Durchführung einer derartigen Entfaltung zur Erzeugung einer Bewegtbild-Animation gezeigt.

Desweiteren offenbaren die Druckschriften US-A-4 283 871 und FR-A-2 618 385 Teilaspekte der vorliegenden Erfindung. US-A-4 283 871 beschäftigt sich mit einem Photoalbum zur Unterbringung von zwei- oder dreiseitigen Bildern, welche jeweils über einen faltbaren Verbindungsabschnitt miteinander verbunden sind. Mit der erfindungsgemäßen Bild-Positioniervorrichtung haben diese Photoalben offensichtlich nichts gemein. FR-A-2 618 385 befaßt sich lediglich mit einem Informationsträger bestehend aus mehreren Abschnitten, die zickzackartig gefaltet sind. Insoweit gelten die Ausführungen zu dem Bildträger aus DE-C-921 734 für diese Entgegenhaltung analog.

Eine Bild-Positioniervorrichtung zeigt z.B. auch die WO 93 144-85. Diese schlägt vor, mehrere je über ein Rollenpaar geführte, parallel übereinanderliegende Streifen zu verwenden. Jeder Streifen weist eine Folge von Bildern, insbesondere Festbildern für ein (Einzel-)Bewegtbild auf. Von der Seite betrachtet, ergibt sich der Eindruck eines (Gesamt-)Bewegtbilds, das sich aus den parallel übereinanderliegenden (Einzel-)Bewegtbildern der Folge von Festbildern jedes Streifens zusammensetzt. Von Nachteil ist aber u.a. die komplizierte Handhabung und der große Aufwand der Vorrichtung.

Eine weniger aufwendige Bild-Positioniervorrichtungen ist z.B. ein sog. "Daumenkino". Bei diesem sind mehrere Flächenelemente, z.B. mehrere Papierseiten, übereinander angeordnet und an einem Ende drehbar miteinander gekoppelt. Jeweils die Vorderseiten und/oder die Rückseiten der Papierseiten tragen Bilder, z.B. Festbilder für eine Bewegtbild-Animation. Von Nachteil ist beim Daumenkino aber u.a. die umständliche Handhabung.

Die Erfindung stellt eine völlig neue Bild-Positioniervorrichtung und ein Herstellungsverfahren zur Verfügung, die - unter Schaffung weiterer Vorteile - u.a. einfach zu handhaben und wenig aufwendig sind.

Sie erreicht dies mit den Gegenstanden der Anspruche 1 und 7. Danach weist die erfindungsgemäße Bild-Positioniervorrichtung Flächenelemente auf, deren Vorderseiten und/oder Rückseiten Bilder aufweisen, wobei jeweils ein Ende eines ersten Flächenelements und eine Vorderseite eines zweiten Flächenelements entlang einer ersten Drehachse drehbar gekoppelt ist, und ein Ende des zweiten Flächenelements und eine Vorderseite eines dritten Plächenelements entlang einer zweiten Drehachse drehbar gekoppelt ist und die erste und die zweite Drehachse im wesentlichen parallel und zueinander versetzt sind.

Des weiteren ist ein Ende des dritten Flächenelements und eine Vorderseite eines vierten Flächenelements entlang einer dritten Drehachse drehbar gekoppelt, und so fort.

Die Flächenelemente sind vorzugweise nur von relativ geringer Dicke und werden von je zwei im wesentlichen ebenen und zueinander parallelen Flächen begrenzt, die die Vorder- bzw. Rückseiten der Flächenelemente bilden.

Jedes Flächenelement hat also zwei Drehachsen: Eine erste an seiner Vorderseite (über die es am Ende eines vorhergehenden Flächenelements drehbar gekoppelt ist), und eine zweite an einem seiner Enden (über die es an der Vorderseite eines darauffolgenden Flächenelements drehbar gekoppelt ist). Besonders vorteilhaft sind sämtliche Drehachsen der Bild-Positioniervorrichtung parallel.

In einem Anfangszustand der Bild-Positioniervorrichtung berühren sich jeweils Vorder- und Rückseiten gekoppelter Flächenelemente. Alle Vorderseiten zeigen dann in eine erste, und alle Rückseiten in eine zweite, entgegengesetzte Richtung. Besonders vorzugsweise sind die Flächenelemente derart gekoppelt, daß in dem Anfangszustand alle drehbar gekoppelten Enden auf der jeweils gleichen Seite der Flächenelemente liegen.

Die erfindungsgemäße Bild-Positioniervorrichtung kann dann vorteilhaft wie folgt betrieben werden:

In dem Anfangszustand zeigen z.B. jeweils die Vorderseiten nach oben, und die Unterseiten nach unten. Wirkt auf das erste, d.h. obenliegende Flächenelement eine Kraft in waagrechter Richtung, dreht sich das erste Flächenelement, und zwar um die Drehachse an dessen Ende (über die es an der Vorderseite des zweiten Flächenelements gekoppelt ist). Das zweite Flächenelement ruht. Die Drehbewegung des ersten Flächenelement endet, wenn es gekippt bzw. beinahe gekippt, d.h. um 180° bzw. beinahe um 180° gedreht ist. Dann zeigt die Vorderseite des ersten Flächenelements nach unten, und dessen Rückseite nach oben.

Wirkt die Kraft weiter, verschiebt sich das erste Flächenelement in waagrechter Richtung und überträgt die Kraft auf das zweite Flächenelement. Dies führt zu einem Drehen des zweiten Flächenelements um die Drehachse an dessen Ende (über die es an der Vorderseite des darauffolgenden Flächenelements gekoppelt ist), und so fort. Die Kraft bewirkt also ein sukkzessives Kippen der Flächenelemente.

Nach oben zeigen jeweils während einer ersten Hälfte des Kippens die Rückseite des zuletzt gekippten, und die Vorderseite des gerade kippenden Flächenelements, und während einer zweiten Hälfte des Kippens die Rückseite des gerade kippenden, und die Vorderseite des dann folgenden Flächenelements.

Einem Betrachter werden somit nacheinander die Bilder aufeinanderfolgender Vorder- bzw. Rückseiten gezeigt.

Wirkt die Kraft in umgekehrter Richtung, kehrt sich der oben beschriebene Vorgang um: Das zuletzt gekippte Flächenelement wird zurückgekippt, dann das zu vorletzt gekippte, usw.

Die erfindungsgemäße Bild-Positioniervorrichtung hat also zusammengefaßt u.a. die Vorteile
- einfachen Aufbaus; und
- einfacher Handhabung.

Besonders vorteilhaft weisen bei der Bild-Positioniervorrichtung die Vorderseiten und/oder die Rückseiten Festbilder für eine Bewegtbild-Animation auf (Anspruch 2). Einem Betrachter werden beim Betreiben der Bild-Positioniervorrichtung dann nacheinander die Festbilder aufeinanderfolgender Vorder- bzw. Rückseiten gezeigt. Er hat, wie oben erläutert, den Eindruck eines sich kontinuierlich verändernden Bewegtbildes.

Bei der Bild-Animation kann zudem auf durch Umkehr der auf die Flächenelemente wirkenden Kraft auf einfache Weise die Animationsrichtung umgekehrt werden. Außerdem kann mit dem Betrag der Kraft die Kippfrequenz und somit das Animationstempo bestimmt werden.

Besonders vorteilhaft ist eine Ausgestaltung, bei welcher jeweils die Rückseite und die Vorderseite gekoppelter Flächenelemente Teile eines Gesamt-Festbilds aufweisen (Anspruch 3).

Wie oben beschrieben, zeigen beim Betrieb der erfindungsgemäßen Bild-Positioniervorrichtung jeweils eine Rückseite eines Flächenelements und eine Vorderseite eines darauffolgenden, gekoppelten Flächenelements nach oben. Diese können also jeweils einen Teil eines Gesamt-Festbildes aufweisen. Gegenüber herkömmlichen Bewegtbild- Animationsvorrichtungen ist dann
- bei gleichem Aufwand die Fläche des Gesamt-Bewegtbilds größer;
- bei gleichbleibender Fläche des Gesamt-Bewegtbilds der Aufwand geringer.

Besonders vorteilhaft sind die jeweils zwei Drehachsen der Flächenelemente nahe beieinander angeordnet (Anspruch 4). Im Anfangzustand nimmt die Bild-Positioniervorrichtung dann nur eine relativ kleine Fläche ein. Zudem wird durch den Abstand der Drehachsen das Tempo der Animation beeinflußt. Je geringer der Dreachsenabstand, desto je höher das Animationstempo.

Die Drehachsen können im wesentlichen gleich weit voneinder entfernt sein. Bei Variation der Drehachsenabständen kann - bei konstanter Kraft - das Animationstempo zusätzlich variiert werden.

In einer vorteilhaft Ausgestaltung sind die Flächenelemente aus Papier, Pappe oder Kunststoff (Anspruch 5). Dies führt u.a. zu geringen Herstellkosten und geringem Gewicht.

Vorzugsweise besteht die erfindungsgemäße Bild-Positioniervorrichtung im wesentlichen aus zieharmonikaartig gefaltetem Papier, zieharmonikaartig gefalteter Pappe oder zieharmonikaartig gefaltetem Kunststoff (Anspruch 5), insbesondere aus einem Papier-, Pappe- oder Kunststoffstreifen mit im wesentlichen parallel liegenden Falzen. Durch die Falze wird der Streifen in Abschnitte unterteilt. Je zwei aufeinanderfolgende Abschnitte sind zu einem Abschnittspaar gekoppelt, beispielweise verklebt. Jedes Abschnittspaar bildet funktionell ein Flächenelement. Der Falz zwischen je zwei aufeinanderfolgenden Abschnittspaaren führt dazu, daß diese - auf einfache Weise - drehbar gekoppelt sind. Dies führt zu weiter verringerten Herstellkosten.

Besonders vorteilhaft ist es zudem, eine Bild-Positioniervorrichtung nach dem Verfahren von Anspruch 7 herzustellen.

Der Vorteil ist vor allem, daß dann handelsübliche Seitenformate verwendet werden können, wodurch die Herstellkosten weiter verringert werden.

Weitere Merkmale, Details und Vorteile der Erfindung ergeben sich aus der nachfolgenden Beschreibung bevorzugter Ausführungsbeispiele. Die Ausführungsbeispiele sind schematisch in der beigefügten Zeichnung dargestellt.

In der Zeichnung zeigt:
- Fig. 1: eine perspektivische Darstellung einer Bild-Positioniervorrichtung zur Erläuterung des Funktionsprinzips;
- Fig. 2: eine Draufsicht auf eine der in Fig. 1 gezeigten Kunststoffplatten sowie auf eine Kunststoffplatte einer zweiten und eine Kunststoffplatte einer dritten Ausführungsform einer Bild-Positioniervorrichtung;
- Fig. 3: eine perspektivische Darstellung einer vierten und einer fünften Ausführungsform der Erfindung;
- Fig. 4: eine perspektivische Darstellung einer sechsten Ausführungsform der Erfindung;
- Fig. 5: eine Draufsicht auf eine Seite Papier zur Erläuterung eines Verfahrens zum Herstellen des in Fig. 4 gezeigten Papierstreifens.

In den Figuren tragen im wesentlichen funktionsgleiche Teile gleiche Bezugszeichen.

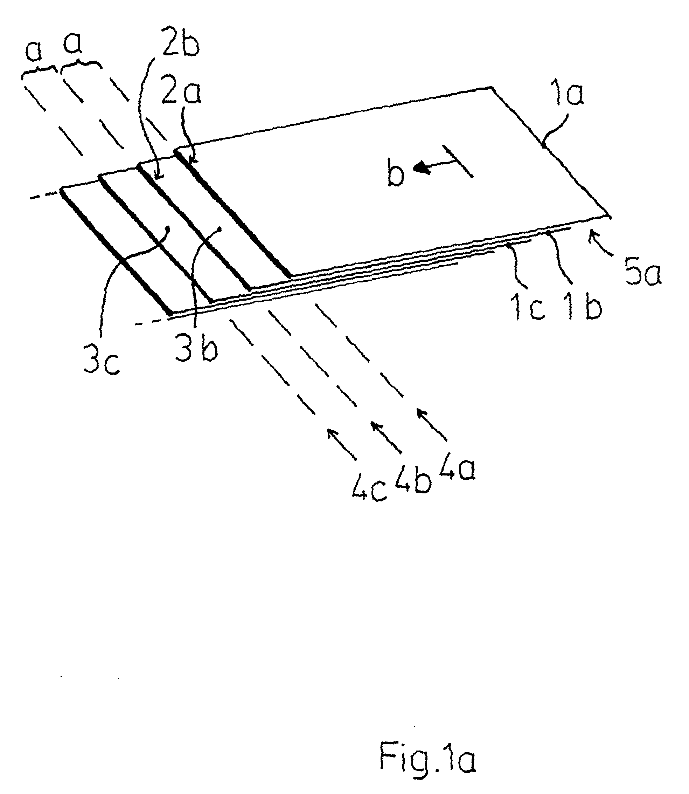

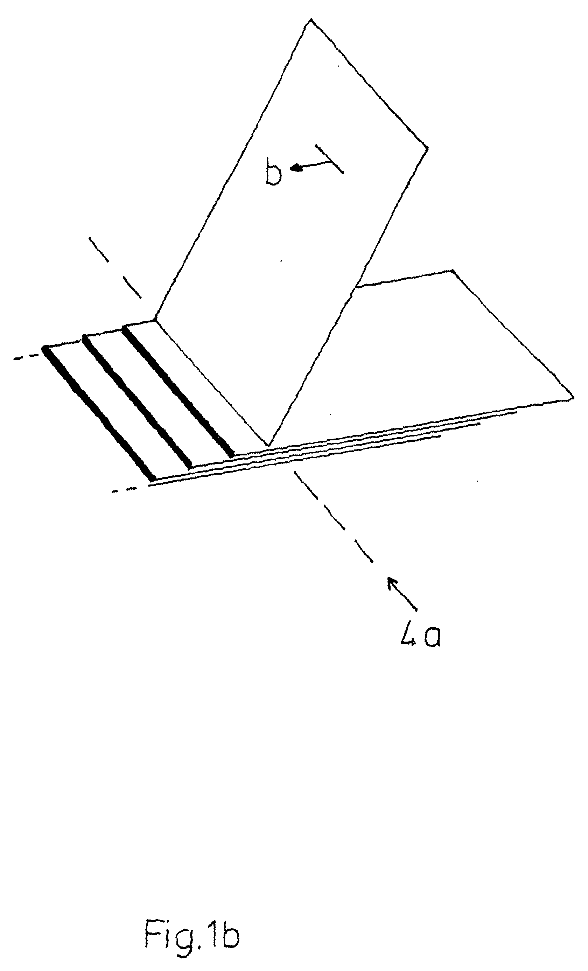

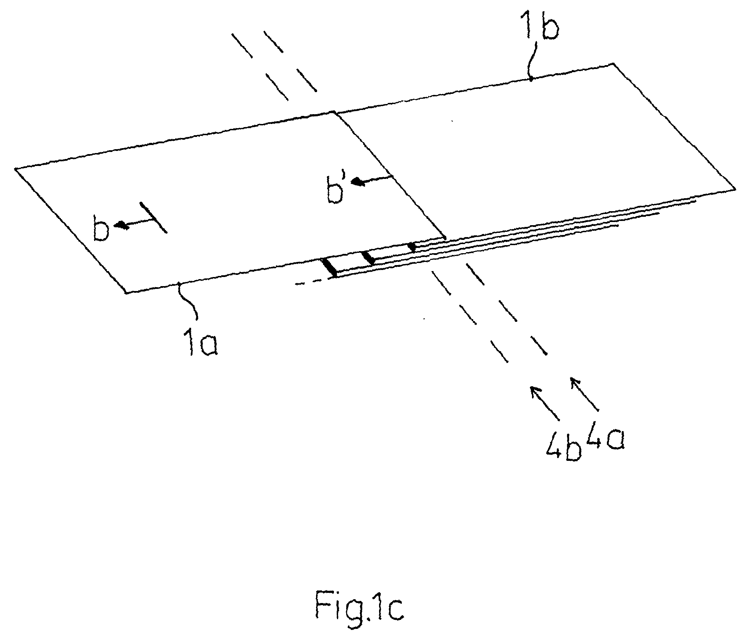

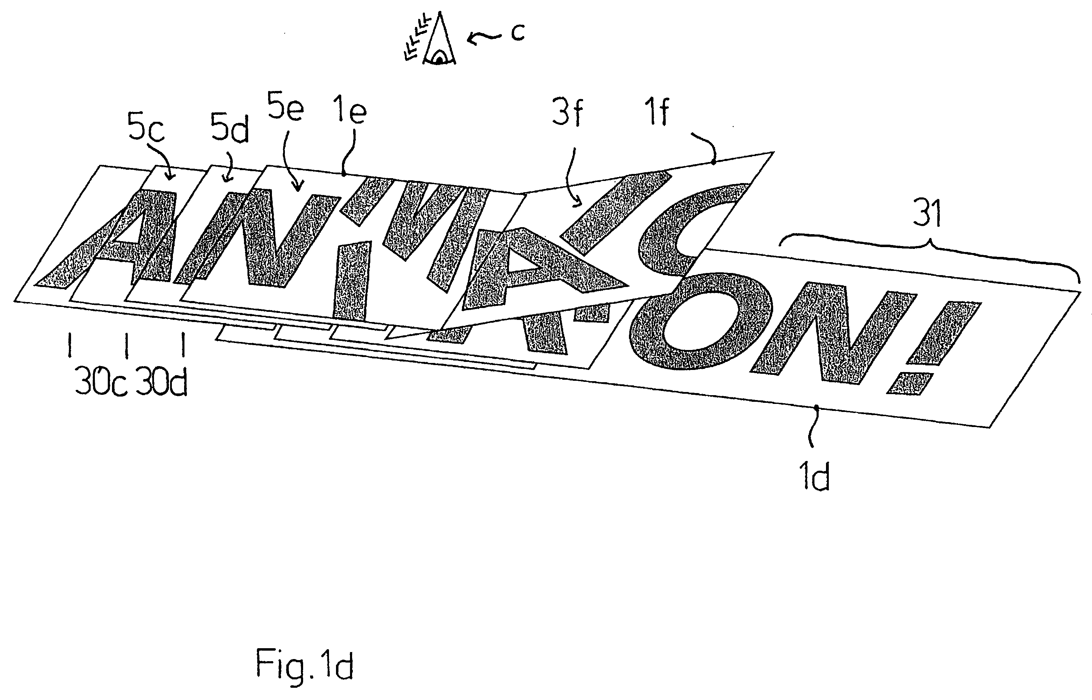

Die in Fig. 1 a gezeigte Bild-Positioniervorrichtung besteht aus einer Vielzahl dünner, rechteckiger Kunststoffplatten 1a, b, c. Die Kunststoffplatten 1a, b, c sind im wesentlichen gleich groß. Ein Ende 2a der ersten Kunststoffplatte 1a ist mit einer Vorderseite 3b der zweiten Kunststoffplatte 1b entlang einer ersten Drehachse 4a, und ein Ende 2b der zweiten Kunststoffplatte 1b ist mit einer Vorderseite 3c der dritten Kunststoffplatte 1c entlang einer zweiten Drehachse 4b drehbar gekoppelt, und so fort.

In der in Fig. 1a gezeigten Anfangsstellung weisen die Vorderseiten 3b, 3c der Kunststoffplatten 1a, 1b, 1c nach oben und die drehbar gekoppelten Enden 2a, 2b liegen links. Die Drehachsen 4a, 4b und eine Drehachse 4c am Ende der Kunststoffplatte 1c sind parallel. Die je zwei Drehachsen 4a, 4b; 4b, 4c jeder Kunststoffplatte 1b; 1c liegen nahe beieinander, in jeweils gleichem Abstand a.

Die drehbare Kopplung zwischen den zwei Kunststoffplatten 1a, 1b; 1b, 1c erfolgt z.B. mit Hilfe eines Drehgelenks (hier nicht dargestellt), wobei die eine Kunststoffplatte 1a, 1b z.B. einen Bolzen und die andere Kunststoffplatte 1b, 1c z.B. eine Buchse des Drehgelenks trägt.

Die Vorderseiten 3b, 3c und Rückseiten 5a der Kunststoffplatten 1a, 1b, 1c weisen Bilder auf (hier nicht dargestellt). Dabei kann es sich z.B. um Bilder für eine Bewegtbild-Animation handeln, wobei jeweils die Vorderseite 3b einer der Kunststoffplatten 1b und die Rückseite 5a der vorhergehenden Kunststoffplatte 1a z.B. zusammengehörende Teile eines (Gesamt-)Festbilds tragen.

Wird gemäß Fig. 1 a eine Zugkraft b in waagrechter Richtung und senkrecht zu den Drehachsen 4a, b, c auf die erste Kunststoffplatte 1a ausgeübt, wird diese gem. Fig. 1b um die Drehachse 4a gedreht, bis sie die in Fig. 1c gezeigte Stellung erreicht, d.h. um 180° gedreht ist.

Die Zugkraft b führt dann zu einem Verschieben der ersten Kunststoffplatte 1a in Kraftrichtung und die Zugkraft b wird auf die zweite Kunststoffplatte 1b übertragen (Kraft b'). Diese beginnt, sich um die Drehachse 4b zu drehen, und so fort. Die Kunststoffplatten 1a, 1b, 1c werden also nacheinander um 180° gedreht.

Dabei zeigen jeweils die Rückseite 5a einer der Kunststoffplatten 1a und die Vorderseite 3b der darauffolgenden Kunststoffplatte 1b nach oben. Dies bedeutet, daß nacheinander jeweils zusammengehörige Teile eines (Gesamt-)Festbildes nach oben zeigen. Werden diese gem. Fig. 1a von einem Betrachter c von oben beobachtet, entsteht bei ihm der Eindruck eines sich kontinuierlich verändernden Bewegtbildes.

Wird die Richtung der Zugkraft b umgedreht (nicht dargestellt), läuft der oben beschriebene Vorgang in umgekehrter Reihenfolge ab: Nacheinander werden die Kunststoffplatten 1b, 1c um eine der Drehachsen 4b, 4c zurückgedreht, bis zu der in Fig. 1c gezeigten Stellung. Schließlich dreht sich die erste Kunststoffplatte 1a gem. den Fig. 1c, 1b, 1a um die Drehachse 4a zurück, bis die in Fig. 1a gezeigte Anfangsstellung erreicht wird. Die Animation läuft rückwärts.

Fig. 1d zeigt die Vorrichtung der Fig. 1a - 1c mit zusätzlich einer Abschluß-Kunststoffplatte 1 d, die eine größere Erstreckung in waagrechter Richtung als sonstige Kunststoffplatten 1e, f aufweist. Der Betrachter c sieht jeweils eine Rückseite 5e der Kunststoffplatte 1e, eine Vorderseite 3f der darauffolgenden Kunststoffplatte 1f, nicht verdeckte Abschnitte 30 c, d von nach oben zeigenden Rückseiten 5 c, d, sowie einen nicht verdeckten Abschnitt 31 der Abschluß-Kunststoffplatte 1d.

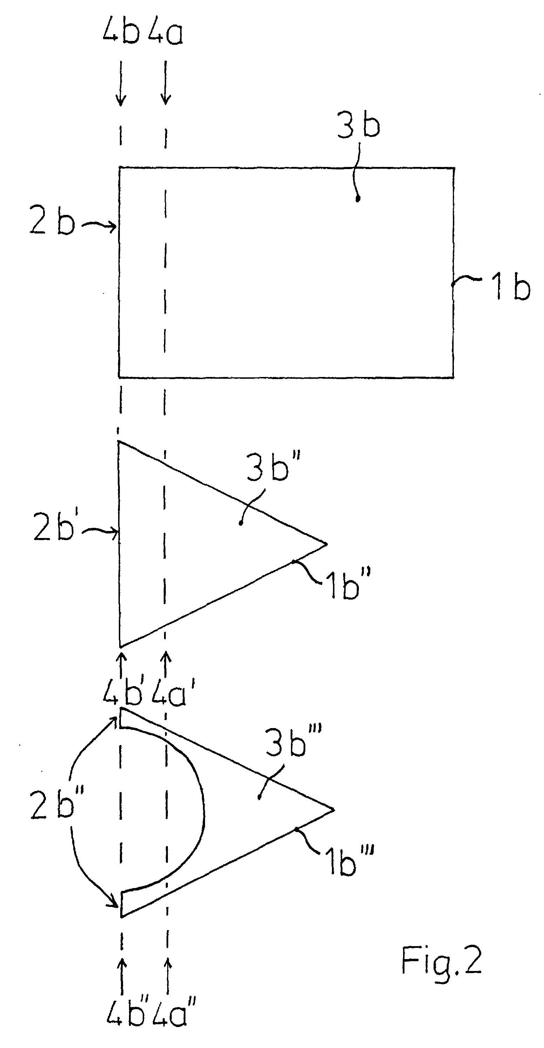

Fig. 2 zeigt die Kunststoffplatte 1b. Außerdem ist eine dreieckige Kunststoffplatte 1b'' einer zweiten, und eine dreieckige Kunststoffplatte mit halbkreisförmiger Ausbuchtung 1b''' einer dritten Ausführungsform einer erfindungsgemäßen Bild-Positioniervorrichtung dargestellt. Das Ende 2a der in Fig. 1 gezeigten Kunststoffplatte 1a (in Fig. 2 nicht dargestellt) ist entlang der Drehachse 4a an der Vorderseite 3b der Kunststoffplatte 1b gekoppelt; entlang der Drehachse 4b ist das Ende 2b der in Fig. 1 gezeigten Kunststoffplatte 1b (in Fig. 2 nicht dargestellt) an der Vorderseite 3c der Kunststoffplatte 1c gekoppelt. In gleicher Weise sind Enden vorhergehender Kunststoffplatten (nicht dargestellt) entlang von Drehachsen 4a', 4a'' an Vorderseiten 3b'', 3b''' der Kunststoffplatten 1b'', 1b''' gekoppelt; entlang von Drehachsen 4b', 4b'' sind Enden 2b', 2b'' der Kunststoffplatten 1b'', 1b''' an Vorderseiten nachfolgender Kunststoffplatten (nicht dargestellt) gekoppelt.

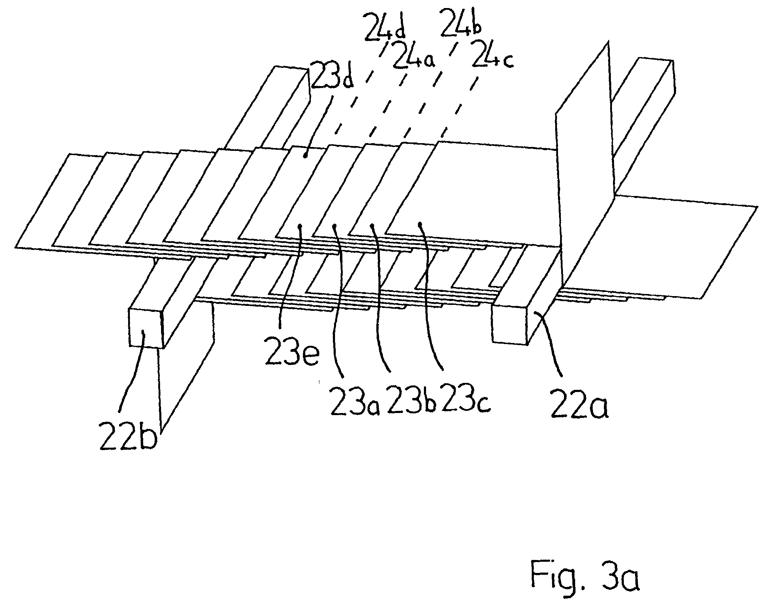

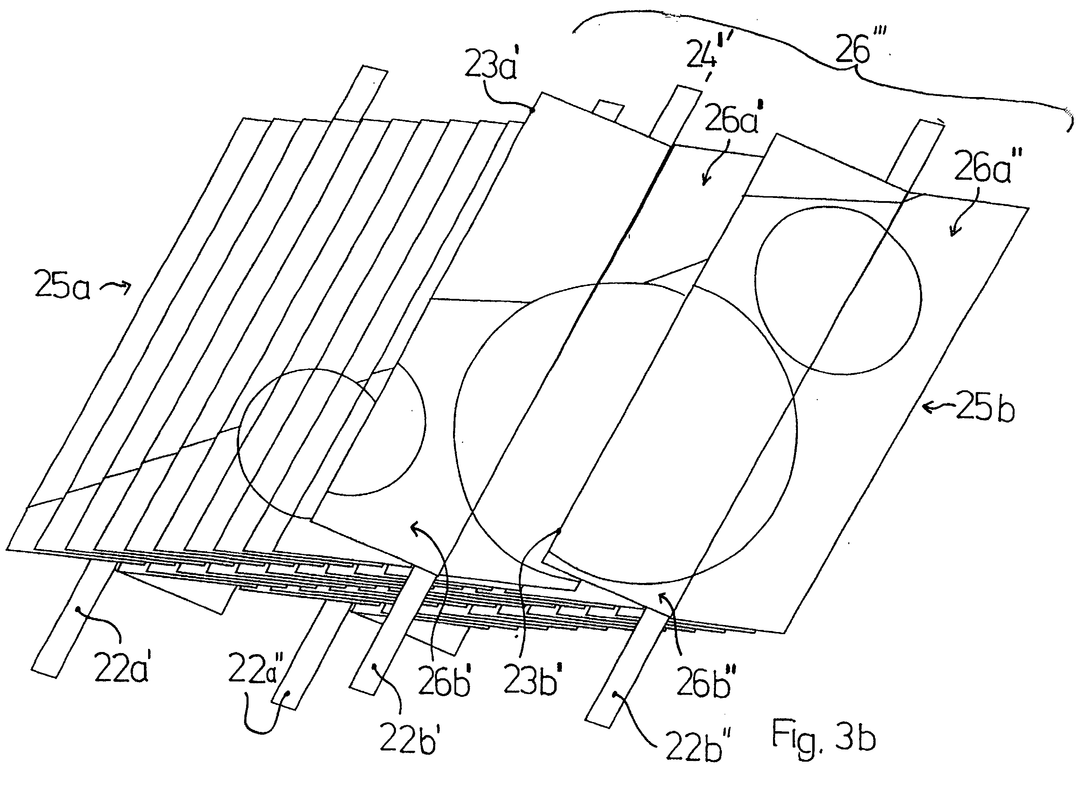

Bei der Bild-Positioniervorrichtung gem. Fig. 3a sind rechteckige Platten 23 a, b, c, d, e - hier aus Kunststoff oder Metall - entsprechend den Ausführungen zu Fig. 1 entlang von parallelen Drehachsen 24 b, c, d gekoppelt. Eine erste Platte 23a ist mit einer zweiten Platte 23b gekoppelt, eine zweite Platte 23b mit einer dritten Platte 23c, und so fort. Eine vorletzte Platte 23d ist mit einer letzten Platte 23e gekoppelt. Die Platten 23a, b, c, d, e weisen Bilder auf (hier nicht dargestellt). Das sich durch die Kopplung ergebende Band ist über eine in Richtung der Drehachsen 24 b, c, d liegende, quaderförmige erste Stange 22a geführt, so daß das es eine Richtungsänderung von 180° erfährt, und über eine ebenfalls in Richtung der Drehachsen 24 b, c, d liegende, quaderförmige zweite Stange 22a zurückgeführt, so daß das es eine weitere Richtungsänderung von 180° erfährt. Die erste Platte 23a ist mit der letzten Platte 23e entsprechend den Ausführungen zu Fig. 1 entlang einer Drehachse 24a gekoppelt, so daß sich ein über die Stangen 22a, b geführtes Endlos-Band ergibt. Durch Drehen der Stangen 22a, b können die Platten 23a, b, c, d, e nacheinander um 180° gedreht werden.

Bei der Bild-Positioniervorrichtung gem. Fig. 3b sind rechteckige Platten 23a' - hier aus Kunststoff oder Metall - entsprechend den Ausführungen zu Fig. 1 und zu Fig. 3a entlang von parallelen Drehachsen 24' gekoppelt, so daß sich ein Endlos-Band 25a ergibt. Dieses ist über einen - hier links liegenden - Stab 22a' - und einen - hier rechts liegenden - Stab 22b' geführt. Entsprechend sind rechteckige Platten 23b' zu einem zweiten Endlos-Band 25b gekoppelt und über einen - hier links liegenden - Stab 22a'' und einen - hier links liegenden Stab - 22b'' geführt.

Die Endlos-Bänder 25a, b sind übereinanderliegend angeordnet. Die links liegenden Stäbe 22a', 22a'' und die rechts liegenden Stäbe 22b', 22b'' sind je um einen Abstand v versetzt voneinander angeordnet. Die Vorder- und Rückseiten der Platten 23a' des ersten Endlos-Bandes 25a und der Platten 23b' des zweiten Endlos-Bandes 25b tragen (Einzel-)Festbilder 26a', b' bzw. 26a'', 26b''. Aufgrund der Versetzung der Stäbe 22a', 22a'' bzw. 22b', 22b'' ist jeweils ein sich aus den (Einzel-)Festbildern des ersten und des zweiten Endlos-Bands 25a, b zusammengesetztes (Gesamt-)Festbild 26''' sichtbar. Aufeinanderfolgende (Gesamt-)Festbilder 26''' ergeben ein (Gesamt-)Bewegtbild einer Bild-Animation.

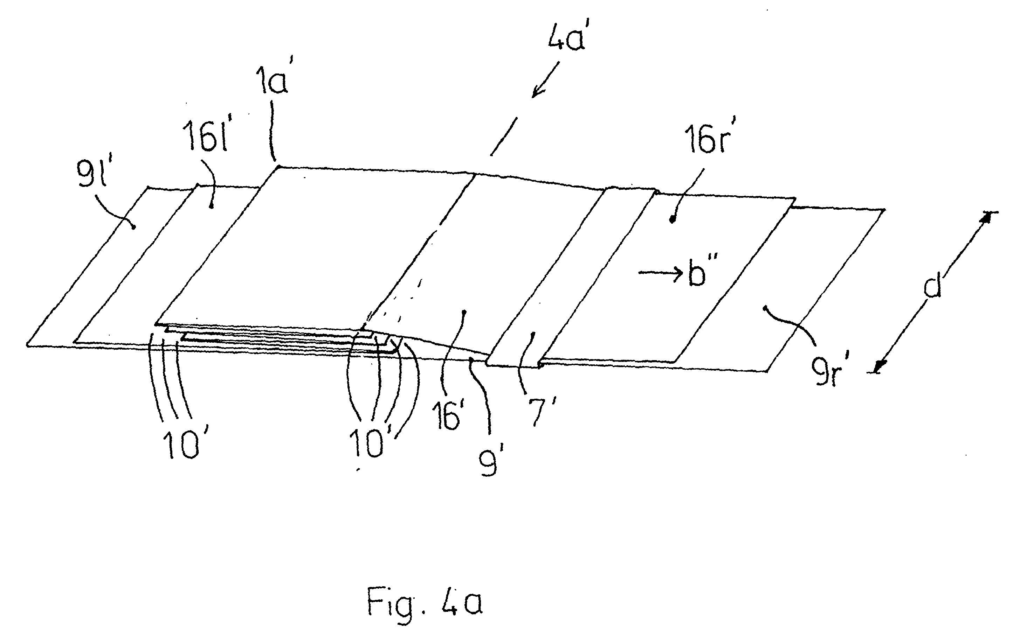

Die in Fig. 4a gezeigte Bild-Positioniervorrichtung besteht aus einem Papierstreifen 16' konstanter Breite d, einer Führungsschiene 6' und einem Führungsring 7', jeweils ebenfalls mit der Breite d und aus Papier. Ein linkes Papierstreifenende 161' ist auf einem linken Führungsschienenende 91' angeordnet und mit diesem gekoppelt, z.B. verklebt. Der Führungsring 7' umgreift ein rechtes Papierstreifenende 16r' und ein rechtes Führungsschieneende 9r'. Das rechte Papierstreifenende 16r' und der Führungsring 7' sind gekoppelt, z.B. verklebt. Das rechte Papierstreifenende 16r' ist somit in Richtung b'' relativ zur Führungsschiene 9' verschiebbar. Der Papierstreifen 16' ist zieharmonikaartig gefaltet, mit parallel liegenden Falzen 10'.

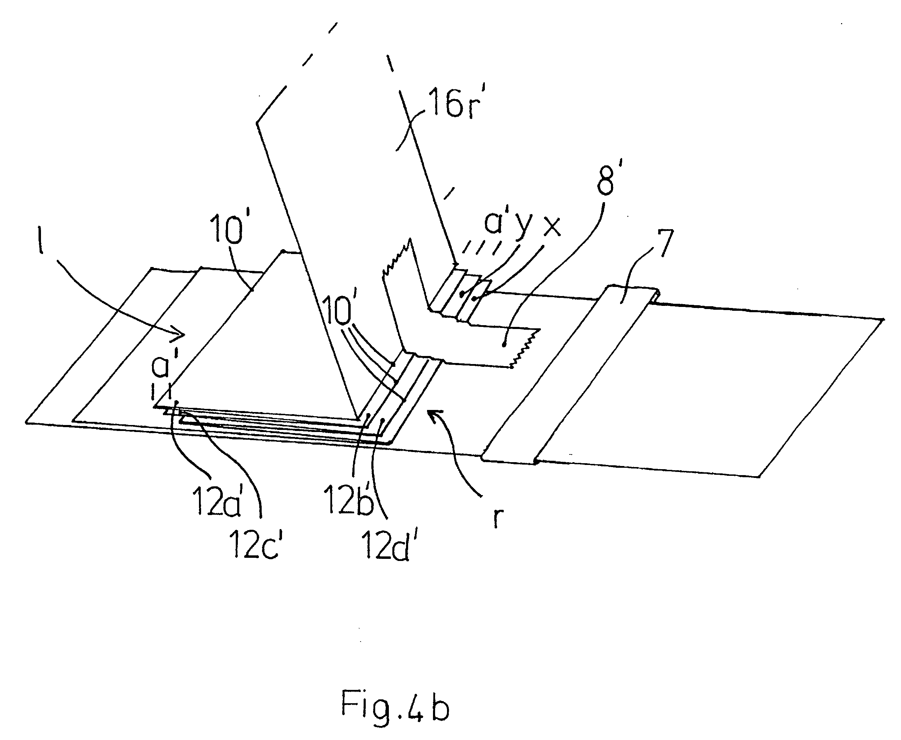

In Fig. 4b ist das rechte Papierstreifenende 16r' aus dem Führungsring 7' herausgezogen und nach links gedreht dargestellt. Die Falze 10' unterteilen den Papierstreifen 16' in Abschnitte 12a', 12b', 12c', 12d'. An einer rechten Seite r sind somit jeweils zwei Abschnitte 12b', 12d' paarweise gekoppelt. Ebenso sind auch an und einer linken Seite 1 jeweils zwei Abschnitte 12a', 12b' paarweise gekoppelt. An der rechten Seite r ragt jeweils ein Endbereich x eines der gekoppelten Paare von Abschnitten 12b', 12c' um eine Länge a' über das darüber liegende gekoppelte Paar von Abschnitten hervor. In gleicher Weise ragt an der linken Seite 1 jeweils ein Endbereich eines der gekoppelten Paare von Abschnitten 12a', 12b' ebenfalls um eine Länge a' über das darunter liegende Paare von Abschnitten 12c', 12d' hervor.

An der rechten Seite r sind je der Endbereich x und ein Endbereich y paarweise mit einem Klebeband 8' verklebt.

Jedes der auf der linken Seite 1 paarweise über die Falze 10' gekoppelten Paare von Abschnitten 12a', 12b'; 12c', 12d' bildet gem. Fg. 4c funktionell ein Flächenelement 1a', 1b' mit jeweils dem Abschnitt 12a', 12c' als eine Vorderseite 3a', 3c' und dem Abschnitt 12b', 12d' als eine Rückseite 3b', 3d'. Die Paare von Abschnitten 12a', 12b'; 12c', 12d' können gekoppelt, z.B. verklebt sein (hier nicht dargestellt).

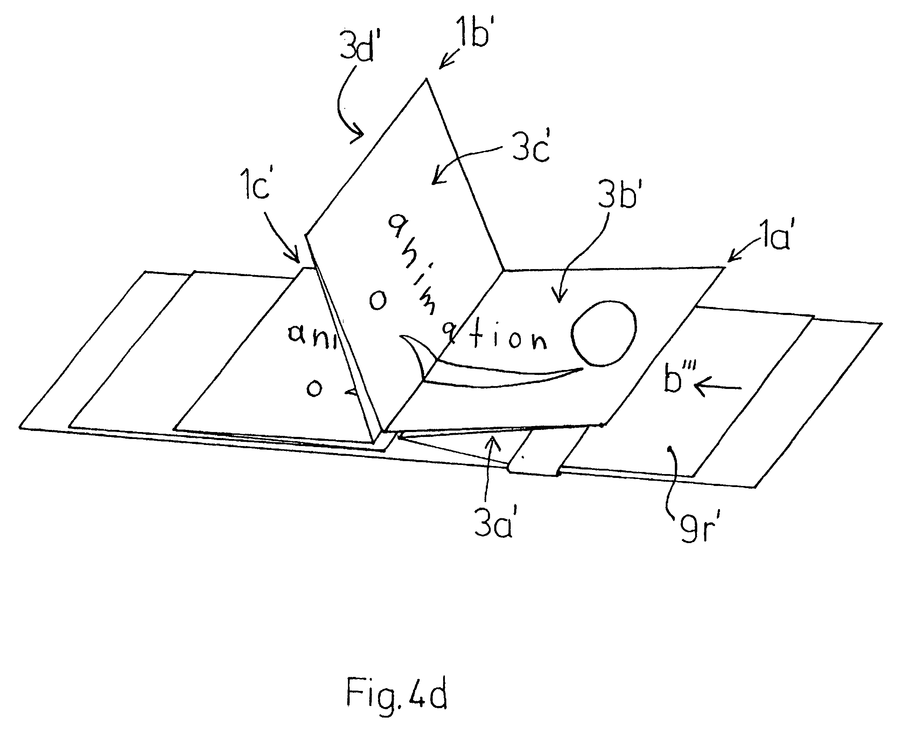

Jedes der Flächenelemente 1a', 1b' weist auf den Vorderseiten 3a', 3c' und den Rückseiten 3b', 3d' gem. Fig. 4d Bilder für eine Bildanimation auf. Dabei tragen aufeinanderfolgende Vorderseiten 3c' und Rückseiten 3b' jeweils zusammengehörende Teile eines (Gesamt-)Festbildes einer Bildanimation.

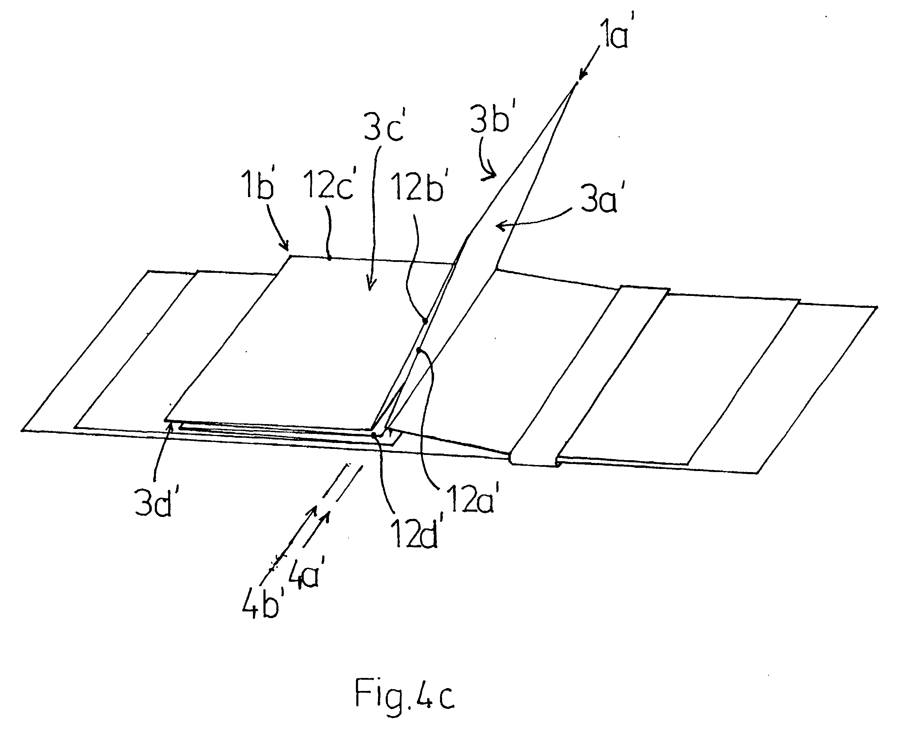

Bewegt man das Papierstreifenende 16' gem. Fig. 4a in Richtung b'', dreht sich das Flächenelement 1a' um die Drehachse 4a', bis es die in Fig. 4c gezeigte Stellung erreicht. Dann dreht sich zusätzlich das Flächenelement 1b' um die Drehachse 4b'. Das Flächenelement 1a' dreht sich weiter, bis zu der in Fig. 4d gezeigten Stellung. Es ist dann gegenüber Fig. 4a um fast 180° gedreht.

Nacheinander zeigen somit jeweils die Rückseite 3b', 3d' eines der Flächenelemente 1a', 1b', 1c' und die Vorderseite 3a', 3c' des nächsten Flächenelements 1a', 1b', 1c', und dann dessen Rückseite 3b', 3d' und die Vorderseite 3a', 3c' des übernächsten Flächenelements 1a', 1b', 1c' nach oben. Dies bedeutet, daß nacheinander jeweils zusammengehörige Teile eines (Gesamt-)Festbildes nach oben zeigen. Werden diese von oben betrachtet, entsteht der Eindruck eines sich kontinuierlich veränderten (Gesamt-) Bewegtbildes.

Bewegt man das Papierstreifenende 9r' gem. Fig. 4d in umgekehrter Richtung b''', wird der oben beschriebene Vorgang umgekehrt. Die Bild-Positioniervorrichtung durchläuft nacheinander die in den Fig. 4d, 4c, 4a gezeigten Stellungen; die Animation läuft rückwärts.

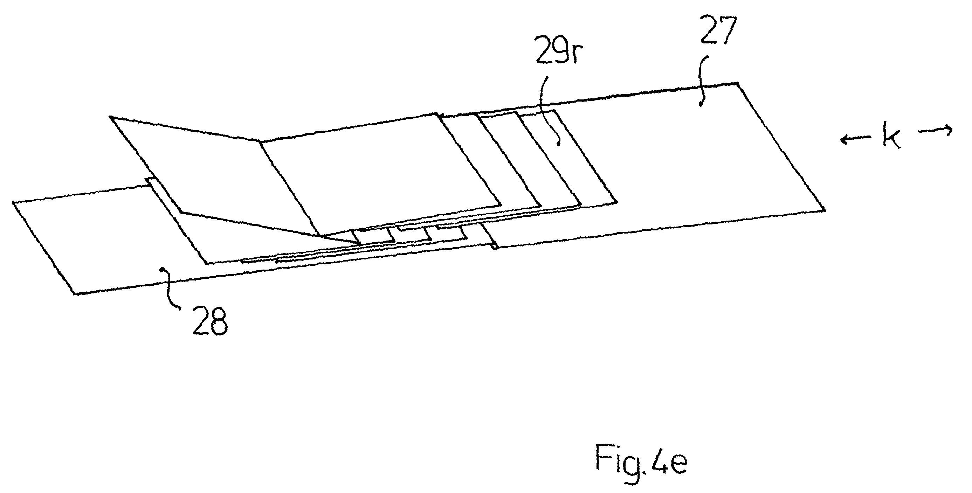

Die in Fig. 4e gezeigte Bild-Positioniervorrichtung entspricht im wesentlichen derjenigen der Fig. 4a-4d. Die Funktion des Führungsringes 7' wird von einem Umschlag 27 übernommen. Der Umschlag 27 umgreift eine Führungsschiene 28; diese ist gegenüber dem Umschlag 27 in Richtung k verschiebbar. Ein rechtes Papierstreifenende 29r ist mit dem Umschlag 27 gekoppelt, hier verklebt.

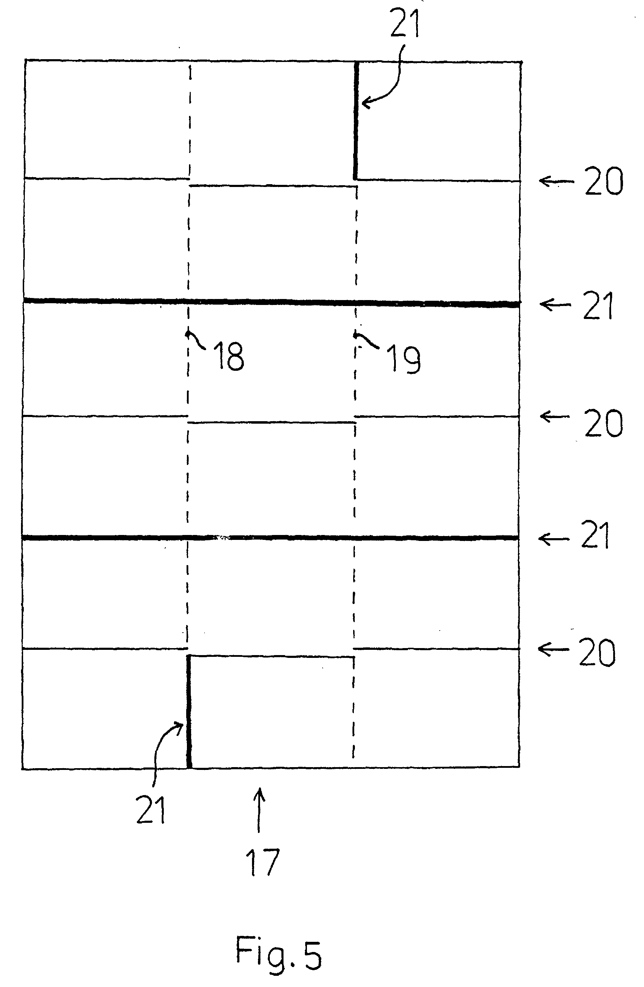

Der Papierstreifen 16' gem. Fig. 4 kann auf einfache Weise aus der in Fig. 5 gezeigten Seite Papier 17 hergestellt werden. Diese ist mit Bildern für eine Bewegtbild-Animation bedruckt (nicht dargestellt). In einem ersten Schritt wird die Seite Papier 17 entlang von gestrichelt dargestellten Linien 18, 19 aufgetrennt, so daß sich ein mäanderförmiger Streifen ergibt. In einem zweiten Schritt wird der mäanderförmige Streifen entlang von dünnen Linien 20 nach vorne, und entlang von dicken Linien 21 nach hinten gefaltet. Der sich ergebende Papierstreifen 16' wird in einem vierten Schritt mit der Führungsschiene 6', dem Führungsring 7' und dem Klebeband 8' zu der in Fig. 4 gezeigten Bild-Positioniervorrichtung zusammengesetzt.

Die Erfindung stellt somit eine mechanische Bild-Positioniervorrichtung mit einfachem Aufbau und einfacher Handhabung zur Verfügung, die zudem kostengünstig hergestellt werden kann.

## Patentansprüche

1. Bild-Positioniervorrichtung aus Flächenelementen (1a, 1a', 1b, 1b', 1b'', 1b''', 1c, 1c', le, 1f), deren Vorderseiten (3a', 3b, 3c, 3c', 3f, 3b'', 3b''') und/oder Rückseiten (3b', 3d', 5a, 5c, 5d, 5e) Bilder aufweisen, bei welcher jeweils ein Ende (2a, 2b, 2b', 2b'') eines ersten Flächenelements (1a, 1a', 1b, 1b', 1b'', 1b''', 1c, 1c', le, 1f) und eine Vorderseite (3a', 3b, 3c, 3c', 3f, 3b'', 3b''') eines zweiten Flächenelements (1a, 1a', 1b, 1b', 1b'', 1b''', 1c, 1c', 1e, 1f) entlang einer ersten Drehachse (4a, 4a', 4b, 4b', 4c, 4a'', 4b'') drehbar gekoppelt ist, und ein Ende (2a, 2b, 2b', 2b'') des zweiten Flächenelements (1a, 1a', 1b, 1b', 1b'', 1b''', 1c, 1c', le, 1f) und eine Vorderseite (3a', 3b, 3c, 3c', 3f, 3b'', 3b''') eines dritten Flächenelements (1a, 1a', 1b, 1b', 1b'', 1b''', 1c, 1c', le, 1f) entlang einer zweiten Drehachse (4a, 4a', 4b, 4b', 4c, 4a'', 4b'') drehbar gekoppelt ist, und die erste und die zweite Drehachse (4a, 4a', 4b, 4b', 4c, 4a'', 4b'') im wesentlichen parallel und zueinander versetzt sind.

2. Bild-Positioniervorrichtung nach Anspruch 1, bei welcher die Vorderseiten (3a', 3b, 3c, 3c', 3f, 3b", 3b''') und/oder die Rückseiten (3b', 3d', 5a, 5c, 5d, 5e) Festbilder für eine Bewegtbild-Animation aufweisen.

3. Bild-Positioniervorrichtung nach einem der vorstehenden Ansprüche, bei welcher jeweils die Rückseite (3b', 3d', 5a, 5c, 5d, 5e) und die Vorderseite (3a', 3b, 3c, 3c', 3f, 3b'', 3b''') gekoppelter Flachenelemente (1a, 1a', 1b, 1b', 1b'', 1b''', 1c, 1c', 1e, 1f) Teile eines Gesamt-Festbilds aufweisen.

4. Bild-Positioniervorrichtung nach einem der vorstehenden Ansprüche, bei welcher die jeweils zwei Drehachsen (4a, 4a', 4b, 4b', 4c, 4a", 4b") jedes der Flachenelemente (1a, 1a', 1b, 1b', 1b'', 1b''', 1c, 1c', 1e, 1f) nahe beieinander angeordnet sind.

5. Bild-Positioniervorrichtung nach einem der vorstehenden Ansprüche, bei welcher die Flächenelemente (1a, 1a', 1b, 1b', 1b'', 1b''', 1c, 1c', 1e, 1f) aus Papier, Pappe oder Kunststoff bestehen.

6. Bild-Positioniervorrichtung nach einem der vorstehenden Ansprüche, welche im wesentlichen aus zieharmonikaartig gefaltetem Papier (16'), zieharmonikaartig gefalteter Pappe oder zieharmonikaartig gefaltetem Kunststoff besteht, wobei je zwei durch einen Falz (10') verbundene Abschnitte (12a', 12b') funktionell ein Flächenelement (1a') bilden.

7. Verfahren zum Herstellen einer Bild-Positioniervorrichtung nach Anspruch 1, umfassend die Schritte:
A) Bereitstellen einer Papier- (17), Pappe- oder Kunststoffseite;
B) Auftrennen der Seite (17) entlang paralleler Linien (18, 19), derart, daß ein mäanderförmiger Streifen entsteht; und
C) Abwechselndes Falten des Streifens nach unten und oben, derart, daß je zwei durch einen Falz (10') verbundene Abschnitte (12a', 12b') des Streifens funktionell ein Flächenelement (1a') bilden.

## Claims

1. Image-positioning device comprising surface elements (1a, 1a', 1b, 1b', 1b'', 1b''', 1c, 1c' , 1e, 1f), the front sides (3a', 3b, 3c, 3c', 3f, 3b'', 3b''') and/or the rear sides (3b', 3d', 5a, 5c, 5d, 5e) of which have images, in which one end (2a, 2b, 2b', 2b'') of a first surface element (1a, 1a', 1b 1b' , 1b'', 1b''', 1c, 1c', 1e, 1f) and a front side (3a', 3b, 3c, 3c', 3f, 3b'', 3b''') of a second surface element (1a, 1a', 1b 1b', 1b'', 1b''', 1c, 1c', 1e, 1f) are in each case coupled rotatably along a first axis of rotation (4a, 4a', 4b, 4b', 4c, 4a'', 4b''), and one end (2a, 2b, 2b', 2b'') of the second surface element (1a, 1a', 1b 1b' 1b'', 1b''', 1c, 1c', 1e, 1f) and a front side (3a', 3b, 3c, 3c', 3f, 3b'', 3b''') of a third surface element (1a, 1a', 1b, 1b', 1b", 1b''', 1c, 1c', 1e, 1f) are in each case rotatably coupled along a second axis of rotation (4a, 4a', 4b, 4b', 4c, 4a'', 4b''), and the first and the second axis of rotation (4a, 4a', 4b, 4b', 4c, 4a'', 4b'') are essentially parallel and offset relative to one another.

2. Image-positioning device according to Claim 1, in which the front sides (3a', 3b, 3c, 3c', 3f, 3b'', 3b''') and/or the rear sides (3b', 3d', 5a, 5c, 5d, 5e) have still images for a moving-picture animation.

3. Image-positioning device according to one of the preceding claims, in which the rear side (3b', 3d', 5a, 5c, 5d, 5e) and the front side (3a', 3b, 3c, 3c', 3f, 3b'', 3b''') of coupled surface elements (1a, 1a', 1b, 1b', 1b'', 1b''', 1c, 1c', 1e, 1f) in each case have parts of an overall still image.

4. Image-positioning device according to one of the preceding claims, in which the two axes of rotation (4a, 4a', 4b, 4b', 4c, 4a'', 4b'') of each of the surface elements (1a, 1a', 1b, 1b', 1b'', 1b''', 1c, 1c', 1e, 1f) are in each case arranged close to one another.

5. Image-positioning device according to one of the preceding claims, in which the surface elements (1a, 1a', 1b, 1b', 1b'', 1b''', 1c, 1c', 1e, 1f) are composed of paper, cardboard or plastic.

6. Image-positioning device according to one of the preceding claims, which essentially comprises paper (16') folded in the manner of a concertina, cardboard folded in the manner of a concertina or plastic folded in the manner of a concertina, two sections (12a', 12b') connected by a fold (10') in each case functionally forming one surface element (1a').

7. Method for the production of an image-positioning device according to Claim 1, comprising the following steps:
A) Provision of a sheet of paper (17), cardboard or plastic;
B) Dividing the sheet (17) along parallel lines (18, 19) in such a way that a meandering strip is formed; and
C) Alternate upward and downward folding of the strip in such a way that two strip sections (12a', 12b') connected by a fold (10') in each case functionally form one surface element (1a').

## Revendications

1. Dispositif pour positionner des images comprenant des éléments de surface (1a, 1a', 1b, 1b', 1b'', 1b''', 1c, 1c' 1e, 1f) dont les faces avant (3a', 3b, 3c, 3c', 3f, 3b", 3b"') et/ou faces arrière (3b', 3d', 5a, 5c, 5d, 5e) présentent des images, dans lequel, à chaque fois, une extrémité (2a, 2b, 2b',2b") d'un premier élément de surface (1a, 1a', 1b, 1b',1b", 1b"', 1c, 1c', 1e, 1f) et une face avant (3a', 3b, 3c, 3c', 3f, 3b", 3b''') d'un deuxième élément de surface (1a, 1a', 1b, 1b', 1b'', 1b"', 1c, 1c', 1e, 1f) sont accouplées de manière tournante le long d'un premier axe de rotation (4a, 4a', 4b, 4b', 4c, 4a", 4b"), et une extrémité (2a, 2b, 2b', 2b") du deuxième élément de surface (1a, 1a', 1b 1b',1b", 1b"', 1c, 1c', le, 1f) et une face avant (3a', 3b, 3c, 3c', 3f, 3b", 3b"') d'un troisième élément de surface (1a, 1a', 1b, 1b', 1b'', 1b"', 1c, 1c', 1e, 1f) sont couplées de manière tournante le long d'un deuxième axe de rotation (4a, 4a', 4b, 4b', 4c, 4a", 4b"), et le premier et le deuxième axe de rotation (4a, 4a', 4b, 4b', 4c, 4a", 4b") sont décalés mutuellement et essentiellement parallèles.

2. Dispositif pour positionner des images selon la revendication 1, dans lequel les faces avant (3a', 3b, 3c, 3c', 3f, 3b", 3b"') et/ou les faces arrière (3b', 3d', 5a, 5c, 5d, 5e) présentent des images fixes pour une animation d'image en mouvement.

3. Dispositif pour positionner des images selon l'une quelconque des revendications précédentes, dans lequel à chaque fois les faces arrière (3b', 3d', 5a, 5c, 5d, 5e) et avant (3a', 3b, 3c, 3c', 3f, 3b", 3b"') d'éléments de surface couplés (1a, 1a', 1b, 1b', 1b'', 1b''', 1c, 1c', 1e, 1f) constituent des parties d'une image fixe d'ensemble.

4. Dispositif pour positionner des images selon l'une quelconque des revendications précédentes, dans lequel les deux axes de rotation (4a, 4a', 4b, 4b', 4c, 4a", 4b") respectifs de chacun des éléments de surface (1a, 1a', 1b, 1b', 1b", 1b"', 1c, 1c', 1e, 1f) sont disposés de façon rapprochée l'un de l'autre.

5. Dispositif pour positionner des images selon l'une quelconque des revendications précédentes, dans lequel les éléments de surface (1a, 1a', 1b, 1b', 1b'', 1b"', 1c, 1c', 1e, 1f) sont faits en papier, carton ou matière plastique.

6. Dispositif pour positionner des images selon l'une quelconque des revendications précédentes, qui est fait essentiellement en papier plié en accordéon (16'), en carton plié en accordéon ou en matière plastique pliée en accordéon, à chaque fois deux segments (12a', 12b') liés par un pli (10') formant fonctionnellement un élément de surface (1a').

7. Procédé pour fabriquer un dispositif pour positionner des images selon la revendication 1 comprenant les étapes suivantes :
A) préparation d'une page en papier (17), carton ou matière plastique ;
B) division de la page (17) le long de lignes parallèles (18, 19) de manière à constituer une bande en forme de méandre ; et
C) pliage alterné de la bande vers le bas et le haut, de manière à ce qu'à chaque fois deux segments de la bande (12a', 12b') liés par un pli (10') forment fonctionnellement un élément de surface (1a').
